# EUROPÄISCHE PATENTSCHRIFT

(11) **EP 0 367 717 B1**
(45) Veröffentlichungstag und Bekanntmachung des Hinweises auf die Patenterteilung: **09.06.1993**
(21) Anmeldenummer: 89810767.7
(22) Anmeldetag: 10.10.1989
(51) Int. Cl.: B01D 15/08, G01N 30/56, B01D 53/18

(54) **Vorrichtung zur Durchführung von Sorptionsverfahren**
Apparatus for carrying out sorption processes
Appareil pour mettre en oeuvre des procédés de sorption

(30) Priorität: 01.11.1988 CH 4061/88
(43) Veröffentlichungstag der Anmeldung: 09.05.1990
(73) Patentinhaber: GEBRÜDER SULZER AKTIENGESELLSCHAFT, CH-8401 Winterthur (CH)
(72) Erfinder: Luder, Jürgen, Dr., CH-8053 Zürich (CH); Shelden, Ronald, Dr., CH-8400 Winterthur (CH); Stringaro, Jean-Paul, Dr., D-8180 Bülach (CH)

(56) Entgegenhaltungen:
- EP-A- 0 289 755
- WO-A- /04202
- DE-A- 2 722 025

## Beschreibung

Die Erfindung betrifft eine Vorrichtung zur Durchführung von Sorptionsverfahren in Form eines statischen Mischers gemäss Oberbegriff des Patentanspruchs 1.

Ein wesentliches Anwendungsgebiet der Erfindung sind Trennaufgaben, bei denen mindestens ein in geringer Konzentration vorkommender Bestandteil aus einem grossen Ueberschuss eines nicht oder wenig sorbierbaren Gemischbestandteiles abzuscheiden ist.

Unter dem Begriff Sorption wird hier die Adsorption und die Absorption als auch die Chemisorption verstanden. Stellvertretend für die drei Sorptionseffekte soll im folgenden vor allem von Adsorption die Rede sein.

Bei bekannten Ausführungsformen derartiger Adsorber werden Schüttungen von festen Adsorptionsmittel, die z.B. kugel- oder pelletförmig ausgebildet sind, untergebracht, welche von dem Gemisch durchströmt werden.

Bei den so ausgebildeten Adsorbern entstehen einerseits hohe Druckabfälle, andererseits findet über dem Adsorberquerschnitt keine homogene Temperaturverteilung statt. Ein wesentlicher Nachteil besteht auch darin, dass keine einheitliche Konzentrationsverteilung über den Adsorberquerschnitt erfolgt, so dass eine breite Massenübergangszone (Adsorptionszone) resultiert und der Adsorber nicht voll ausgenützt werden kann. Der Adsorber ist bis zum "Durchbruch" beladen, wenn der Anfang der Massenübergangszone das Ende der Adsorptionsschicht erreicht hat.

Schliesslich verläuft eine grosse Anzahl der üblichen Adsorptionen exotherm, so dass im Schüttbett örtliche Ueberhitzungen (hot spots) entstehen, welche die Lebensdauer der Adsorptionsmittel begrenzen.

Um die Abführung der hierbei entstehenden örtlichen Ueberhitzungen in Grenzen zu halten, d.h. für eine verbesserte Abführung der Wärme an die Adsorberwandungen zu erreichen, ist es üblich, im Adsorber eine Anzahl von Kühlrohren anzuordnen, welche von einem wärmeaufnehmenden Mittel durchströmt werden. Jedoch ist eine solche Ausführungsweise kosten- und herstellungsmässig aufwendig.

Ausser den vorstehend beschriebenen bekannten Ausführungsformen wäre es möglich, sogenannte statische Mischer einzusetzen, die aus einem Zusammenbau von mehreren stationär in einem Zylinder angeordneten, sich kreuzenden Lagen bestehen, wobei diese Lagen entweder mit einem festen Adsorptionsmittel, beispielsweise mittels eines Bindemittels beschichtet oder auch selbst aus Adsorptionsmittel bestehen können.

Diese Ausführungsformen weisen zwar hinsichtlich einer homogenen Temperatur- und gleichmässigen Konzentrationsverteilung, geringer Verweilzeit und relativ geringen Druckabfall auch als Einsatz in Adsorptionsverfahren gewisse Vorteile auf. Jedoch bestehen wesentliche Nachteile darin, dass die Adsorptionsmaterialien jeweils ausschliesslich an den Oberflächen der in Form von statischen Mischern ausgebildeten Vorrichtungen mit der fluiden Phase in Kontakt kommen.

Ausserdem ist eine Beschichtung der Lagen arbeitsintensiv und kann häufig nur mit Hilfe von Bindemitteln, wie z.B. Zwischenschichten aus Aluminiumoxid erfolgen, was die Wirksamkeit der Adsorptionsmaterialien herabsetzt.

Bildet man die Lagen der Vorrichtungen selbst aus Adsorptionsmaterial aus, so setzt dieses voraus, dass das Material auf einfache Weise in die gewünschte Form gebracht werden kann. Ausserdem sind solche Materialien unter Umständen sehr teuer.

Gemäss der nachveröffentlichten EP-A-0 289 755 wäre es auch möglich, Einbauten mit sich kreuzenden Strömungskanälen einzusetzen und die ganze Kolonne grossteils mit einem Chromatographieträger zu füllen. Dies ergäbe zwar eine gute Quervermischung, der Druckabfall wäre jedoch sehr hoch.

Gemäss der nachveröffentlichten WO 89/04202 wäre es auch denkbar, ein Chromatographie- oder Adsorbermaterial in einem Stützgewebe zu fixieren, das beidseitig von Porenmembranen bzw. feinmaschigem Gewebe verschlossen ist, um damit hohe Drücke zu ermöglichen. Dabei wird das flächige System aufgewickelt. Dies ergibt jedoch keine Quervermischung und damit, wie schon ausgeführt, alle Nachteile einer schlechten Homogenisierung und Wärmeableitung. Auf einem ganz anderen Gebiet ist aus der DE-A-27 22 025 eine ähnliche flächenhafte Struktur mit mindestens einer permselektiven Membran und einer, ein Adsorbens enthaltenden Trägerschicht, zur Entfernung von toxischen Metaboliten aus Blut, bekannt geworden. Auch diese Struktur weist die beschriebenen Nachteile auf.

Die Erfindung hat es sich zur Aufgabe gemacht, eine Vorrichtung zu schaffen, die eine vorteilhafte Ausnutzung der Adsorptionsmaterialien und lange Lebensdauer bei der Durchführung von Adsorptionsverfahren ermöglicht, sowie die Verwendung eines breiten Spektrums von Adsorptionsmaterialien zu gestatten. Die Erfindung soll vor allem für Adsorptionsmaterialien, die in fester Form vorliegen, wie z.B. Aktivkohlen, Silikagele, Aluminiumoxid, Zeolithe oder Ionenaustauschharze verwendet werden können.

Diese Aufgabe wird erfindungsgemäss durch die im Kennzeichen von Anspruch 1 angegebenen Massnahmen gelöst.

In den Ansprüchen 2 bis 8 sind vorteilhafte Ausführungsformen für die Wände der Lagen und in den Ansprüchen 9 bis 11 geeignete Sorptionsmaterialien angegeben.

Von weiterem wesentlichem Vorteil bei der Erfindung ist es, dass bei ihr ebenfalls die an sich für reine Mischverfahren bekannten Eigenschaften, wie z.B. homogene Temperaturverteilung und Konzentrationsausgleich über den Querschnitt, enge Verweilzeitverteilung und sehr wenig bis keine Rückvermischung ausgenutzt werden, d.h. es besteht eine sogenannte Kolbenströmung.

Von wesentlicher Bedeutung ist es auch, dass aufgrund dieser gleichmässigen Temperaturverteilung und des über den Adsorberquerschnitt erfolgenden Konzentrationsausgleiches die Kapazität des Festbettes besser ausgenützt werden kann.

Die mit den erfindungsgemäss ausgebildeten Vorrichtungen ausgerüsteten Festbettadsorber können im Vergleich zu den eingangs erwähnten bekannten Festbettadsorbern für den gleichen Durchsatz mit einer kleineren Länge des Festbettes ausgebildet werden.

Es kann auch vorteilhaft sein, mehrere solcher Vorrichtungen im Adsorbergehäuse übereinander anzuordnen, wobei vorteilhaft die übereinanderliegenden Vorrichtungen gegenseitig in bezug auf die Längsachse des Adsorbers um ca. 90° gegeneinander versetzt angeordnet sind.

Die Erfindung kann grundsätzlich auf alle statischen Mischer angewendet werden, jedoch ist ihre Verwendung von besonderem Vorteil für Strukturen, wie sie beispielsweise in der bereits erwähnten CH-A 547 120 oder in der CH-A 642 564 beschrieben und dargestellt sind.

Ein weiteres vorteilhaftes Anwendungsgebiet der Erfindung sind chromatographische Trennverfahren, die im wesentlichen in einer kontinuierlich ablaufenden Kombination von Adsorptions- und Desorptionsvorgängen bestehen.

Derartige Prozesse und etliche Anwendungen sind beispielsweise in einem Artikel "Preparative Application of HPLC, A. Wehrli; in: Practice of High Performance Liquid Chromatography, H. Engelhardt, ed., Springer Verlag 1986, S. 109" im einzelnen beschrieben.

Ein wesentlicher Nachteil einer Chromatographie-Schüttung besteht im Gegensatz zu den erfindungsgemäss angeordneten statischen Mischerstrukturen darin, dass kein radialer Temperatur- und Konzentrationsausgleich über den Kolonnenquerschnitt erfolgt. Ausserdem entsteht aufgrund der ungeordneten Strömungsform der mobilen Phase ein relativ hoher Druckabfall im Gegensatz zu der geordneten Struktur der erfindungsgemäss eingesetzten statischen Mischerstrukturen.

Setzt man nun anstelle der bekannten Schüttungen die erfindungsgemässen Strukturen in der chromatographischen Kolonne ein, so werden alle für den vorstehend beschriebenen Adsorber erzielten Vorteile erreicht.

Die Erfindung wird im folgenden anhand der Zeichnungen näher erläutert.
Fig. 1 zeigt in perspektivischer Darstellung eine Ausführungsform einer erfindungsgemäss ausgebildeten Vorrichtung, während in der
Fig. 2 eine Festbettadsorptionsanlage und in
Fig. 3 eine Chromatographiekolonne für die Durchführung einer Trennung zweier Komponenten dargestellt sind.

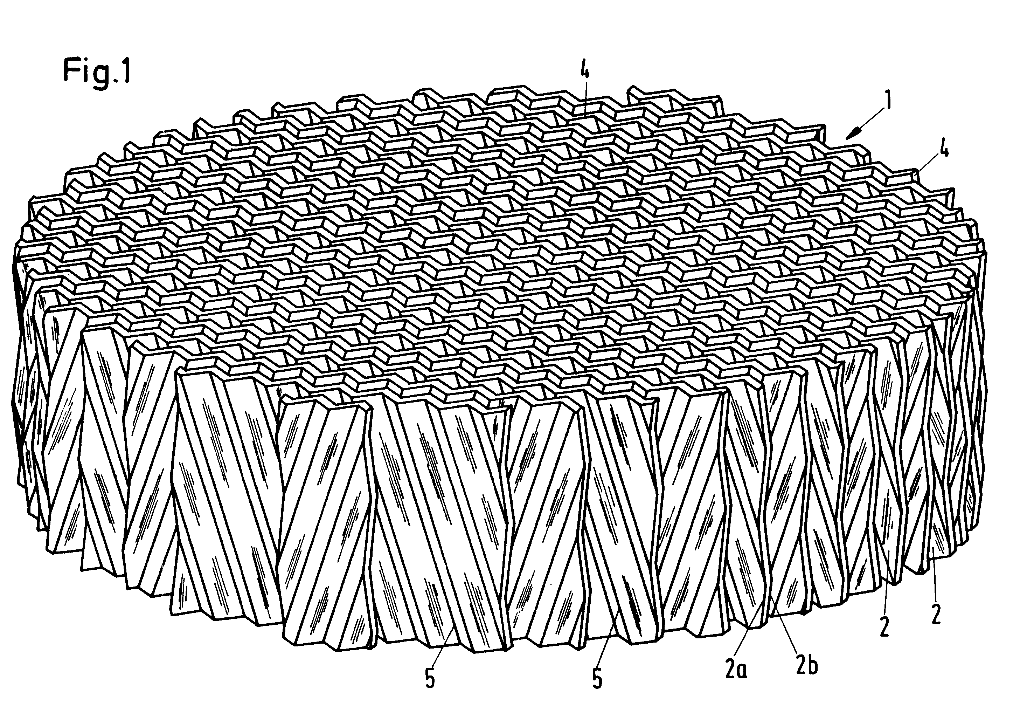

Die in Fig. 1 dargestellte Vorrichtung 1 besteht aus parallel zueinander angeordneten, gefalteten Lagen 2, die jeweils einen Doppelmantel 2a und 2b aufweisen, wobei die Wände, wie es in den Ansprüchen 2 bis 8 angegeben ist, aus einem für die Adsorptive durchlässigen und für das Sorptionsmaterial undurchlässigen Material bestehen.

In den von den Doppelwänden 2a und 2b gebildeten Zwischenräumen ist ein entsprechend dem Verwendungszweck gewähltes Adsorptionsmaterial 4 in fester oder Absorptionsmittel in flüssiger Form eingebracht.

Im Ausführungsbeispiel weist die Vorrichtung einen kreisförmigen Querschnitt auf. Die Form des Querschnittes wird der jeweils gewählten Formgebung des Adsorbergehäuses angepasst, d.h. sie kann beispielsweise auch quadratisch, rechteckig oder polygonzugartig ausgeführt sein.

Die einzelnen Lagen 2 sind gefaltet, wobei die Faltungen 5 einen Winkel zur Längsachse der Vorrichtung aufweisen und sich die Faltungen von benachbarten Lagen 2 kreuzen.

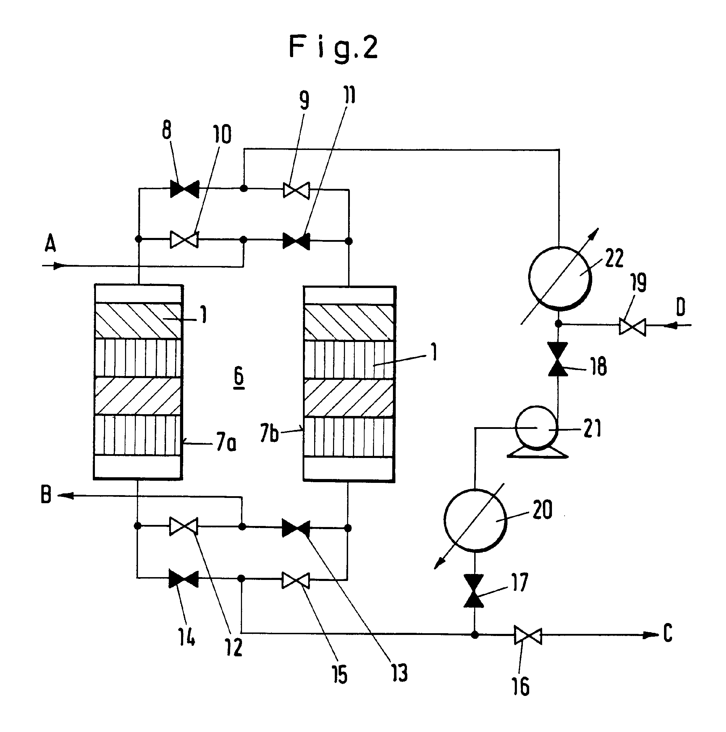

Fig. 2 zeigt in schematischer Darstellungsweise eine Festbettadsorptionsanlage mit zwei zylindrischen Adsorber-Gehäusen 7a, 7b.

In den Gehäusen 7a und 7b sind erfindungsgemäss ausgebildete Vorrichtungen 1 übereinander angeordnet, wobei hintereinander benachbarte Vorrichtungen, wenn sie wie die in Fig. 1 dargestellte Ausführungsform ausgebildet sind, jeweils um einen Winkel von 90° gegeneinander bezüglich der Rohrachse versetzt sind.

In Fig. 2 ist die bekannte Technologie einer Anlage mit zwei Adsorberkolonnen dargestellt, die durch Temperaturswing regeneriert werden (Desorptionsstufe).

Es bedeuten: 7a, 7b Adsorber, 8 - 19 Ventile, 20 Kühler, 21 Umlaufgebläse, 22 Erhitzer, A Gaseintritt, B Gasaustritt, C Desorbataustritt, D Desorptionsgaseintritt.

Adsorber 7a befindet sich in der Adsorptionsphase, Adsorber 7b wird regeneriert. Das mit Adsorptiv beladene Trägergas strömt bei A in die Anlage und gelangt über 10 in den Adsorber 7a. Hier wird es vom Adsorptiv befreit und verlässt über 12 die Anlage bei B. Die Adsorption dient entweder zur Reinigung des Trägergases vom unerwünschten Adsorptiv oder zur Gewinnung des Adsorptivs als benötigtes Endprodukt. Adsorber 7b wurde vorher mit Adsorptiv beladen und befindet sich in der Desorptionsphase. Dazu wird über D, 19 Desorptionsgas in den Kreislauf gebracht, in 22 aufgeheizt und durch 9 in Apparat 7b gefahren. Das Adsorptiv wird desorbiert, das Gemisch gelangt über 15, 16, C aus der Anlage. Ist Kolonne 7b auf diese Weise regeneriert, setzt die Kühlung ein. Dazu kann z.B. 22 ausser Betrieb genommen und 16, 19 geschlossen werden. Bei geöffneten 18, 17 kann das Desorptionsgas solange über das Gebläse 21 und den Kühler 20 umgewälzt werden, bis 7b auf die Adsorptionstemperatur abgekühlt ist. Danach werden durch entsprechende Umschaltung der Ventile die Kolonnen 7a und 7b in ihrer Funktion ausgetauscht.

Neben dem Temperaturswing gelten der Druckswing und die Verwendung eines Verdrängungsgases als technische Desorptionsverfahren. Bei grosser Kompliziertheit der Desorptionsstufe kann es auch erforderlich sein, mehr als zwei Kolonnen für das Verfahren vorzusehen. Im beschriebenen Beispiel müssen die Adsorptions- und die Desorptionszeit einander gleich sein. Bei entsprechender Schaltung einer Mehrkolonnen-Anlage ist das Verhältnis der Ad- zur Desorptionszeit unter Beibehaltung der vollkontinuierlichen Gestaltung der Anlage variabler.

Aufgrund der Anwendung der erfindungsgemäss ausgebildeten Vorrichtungen und ihrer an vorstehender Stelle beschriebenen Vorteile wird weniger Adsorptionsmittel benötigt als bei dem in der Einleitung beschriebenen Adsorber. Ueberhitzungen werden weitgehend aufgrund der guten Wärmeableitung an die Adsorberwandung vermieden.

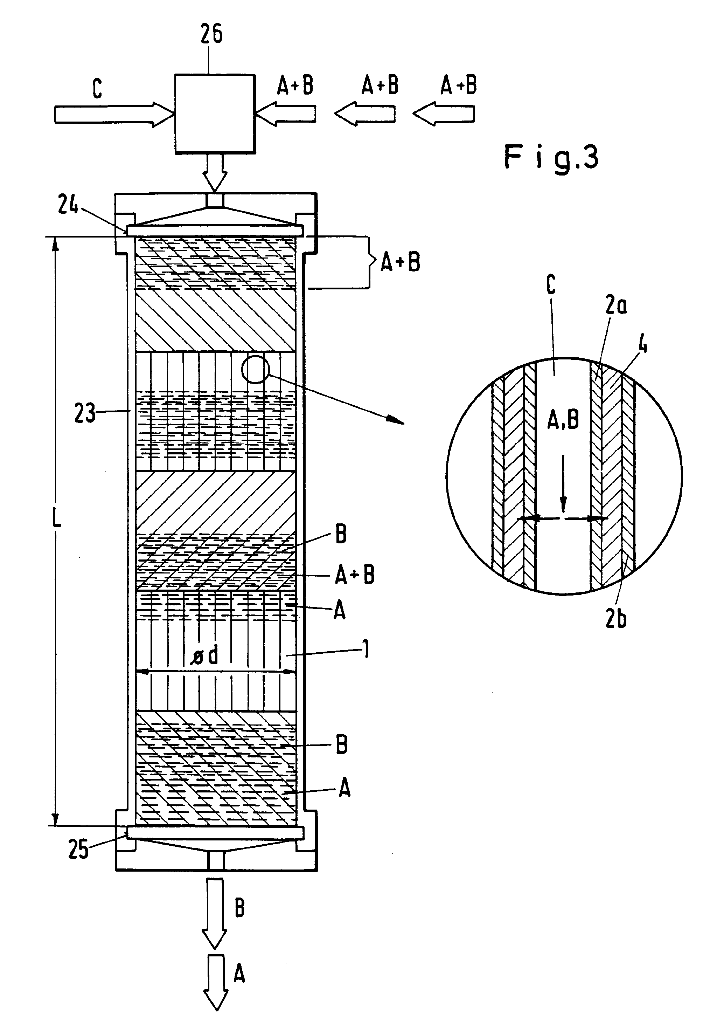

Fig. 3 zeigt in schematischer Darstellungsweise eine chromatographische Trennkolonne 23 mit Durchmesser d und Länge L, in welcher ein mit erfindungsgemäss ausgebildeten Vorrichtungen 1(s. z.B. Fig. 1) bestückte chromatographische Packung angeordnet ist.

Ober- und unterhalb des gesamten Packungsabschnittes sind Verteiler 24 und 25 angeordnet. Im Packungsabschnitt, bestehend aus mehreren Vorrichtungen 1, findet die Stofftrennung statt.

In diesem Fall werden diese Packungskörper 1 von einer flüssigen oder gas- bzw. dampfförmigen Phase C kontinuierlich durchströmt. In der Flüssigchromatographie wird die mobile Phase C durch das Elutionsmittel, in der Gaschromatographie durch das Trägergas gebildet. Für jede Trennung wird der mobilen Phase C dicht vor dem Kolonneneingang durch eine Dosiervorrichtung 26 eine Menge der zu trennenden Probe A + B zugesetzt. In der Trennkolonne werden die einzelnen Komponenten A, B verschieden stark von der stationären Phase, dem Sorptionsmaterial 4, aufgenommen und verschieden lange festgehalten. Die Komponenten A, B wandern dadurch langsamer als die mobile Phase C. Da die einzelnen Komponenten entsprechend ihren Eigenschaften unterschiedliche Geschwindigkeiten entwickeln, spaltet sich das anfangs einheitliche Substanzgemisch A + B nach und nach in Komponentenzonen A und B auf, die nach einer bestimmten Laufzeit verschieden grosse Strecken in der Trennkolonne zurückgelegt haben (Fig. 3).

Die Auslegung einer Kolonne 23 wird durch zwei Faktoren beeinflusst:
- der Beschaffenheit der stationären Phase 4, sowie
- dem Durchflusswiderstand der mobilen Phase C.

Die Vorteile der Kolonne mit erfindungsgemässen Vorrichtungen 1 gegenüber der Kolonne mit ungeordneter Schüttung ergeben sich aus dem höheren Durchsatz sowie aus dem geringeren Strömungswiderstand der mobilen Phase und der dadurch möglichen schlanken Kolonnengeometrie.

Ausserdem ermöglicht die Anwendung der Erfindung eine unproblematische Massstabsvergrösserung (scale up) der Gesamtanlage.

## Patentansprüche

1. Vorrichtung zur Durchführung von Sorptionsverfahren in Form eines statischen Mischers, der vorzugsweise aus einer Mehrzahl von Lagen besteht, wobei sich jeweils zwei benachbarte Lagen an ihren Auflagestellen berühren und zwischen benachbarten Lagen sich kreuzende Strömungskanäle vorhanden sind und bei der die die Struktur bildenden Lagen doppelwandig unter Freilassung von Zwischenräumen ausgeführt sind, von denen mindestens eine Anzahl mit Sorptionsmaterial gefüllt sind, wobei die Wände der Lagen durchlässig für das strömende Medium mit den Adsorptiven und undurchlässig für die Sorptionsmaterialien sind.

2. Vorrichtung nach Anspruch 1, dadurch gekennzeichnet, dass die Wände der Lagen bei festem Sorptionsmaterial aus Drahtgewebe oder Drahtgewirk bestehen.

3. Vorrichtung nach Anspruch 2, dadurch gekennzeichnet, dass die Drähte mindestens zum Teil aus Metall bestehen.

4. Vorrichtung nach Anspruch 2, dadurch gekennzeichnet, dass die Drähte aus Glas- oder Kunststoff bestehen.

5. Vorrichtung nach Anspruch 1, dadurch gekennzeichnet, dass die Wände der Lagen aus einem Vlies aus Kunststoff- und/oder Glasfasern bestehen.

6. Vorrichtung nach Anspruch 1, dadurch gekennzeichnet, dass die Wände der Lagen aus einem porösen Material bestehen, derart, dass die Poren von einer solchen Grösse sind, dass sie für die Adsorptive durchlässig und für das Sorptionsmaterial undurchlässig sind.

7. Vorrichtung nach Anspruch 6, dadurch gekennzeichnet, dass die Wände der Lagen als semipermeable Membrane ausgebildet sind.

8. Vorrichtung nach Anspruch 6, dadurch gekennzeichnet, dass die Wände der Lagen aus einem Sintermaterial bestehen.

9. Vorrichtung nach Anspruch 1, dadurch gekennzeichnet, dass bei Adsorption die Sorptionsmaterialien aus Feststoffpartikeln bestehen.

10. Vorrichtung nach Anspruch 9, dadurch gekennzeichnet, dass die Feststoffpartikel nach Einfüllung in die Zwischenräume ihren Zustand durch Polymerisation ändern, wobei die hierbei entstandene poröse Masse durchlässig für die Adsorptive ist.

11. Vorrichtung nach Anspruch 9, dadurch gekennzeichnet, dass aus den Feststoffpartikeln nach Einfüllung in die Zwischenräume eine poröse Keramik- bzw. Sinterstruktur gebildet wird, welche durchlässig für die Adsorptive ist.

12. Vorrichtung nach Anspruch 1, dadurch gekennzeichnet, dass abwechslungsweise Zwischenräume mit Sorptionsmaterial gefüllt und die restlichen Zwischenräume von einem Kühl- bzw. einem Heizmedium durchströmt sind.

13. Verwendung der Vorrichtung nach Anspruch 1 für chromatographische Trennverfahren.

## Claims

1. Device for carrying out sorption processes in the form of a static mixer which preferably consists of a plurality of layers, each two adjacent layers contacting one another at their bearing points, intersecting flow channels being provided between adjacent layers, the layers forming the structure being double-walled so as to leave interspaces, at least some of which are filled with sorption material, and the walls of the layers being permeable to the flowing medium with the adsorbates and impermeable to the sorption materials.

2. Device according to claim 1, characterised in that the walls of the layers consist of wire cloth or knitted wire fabric when the sorption material is in solid form.

3. Device according to claim 2, characterised in that the wires consist at least in part of metal.

4. Device according to claim 2, characterised in that the wires consist of a glass or plastic material.

5. Device according to claim 1, characterised in that the walls of the layers consist of a nonwoven fabric of plastic and/or glass fibres.

6. Device according to claim 1, characterised in that the walls of the layers consist of a porous material whose pores are of a size such that they are permeable to the adsorbates and impermeable to the sorption material.

7. Device according to claim 6, characterised in that the walls of the layers are formed as semi-permeable membranes.

8. Device according to claim 6, characterised in that the walls of the layers consist of a sintered material.

9. Device according to claim 1, characterised in that when adsorption is carried out the sorption materials consist of solid particles.

10. Device according to claim 9, characterised in that, after being introduced into the interspaces, the solid particles undergo a change of state through polymerization, the resultant porous material being permeable to the adsorbates.

11. Device according to claim 9, characterised in that, after being introduced into the interspaces, a porous ceramic or sintered structure is formed from the solid particles which is permeable to the adsorbates.

12. Device according to claim 1, characterised in that some interspaces are filled with sorption material and a cooling or heating medium flows through the remaining interspaces in an alternating manner.

13. Use of the device according to claim 1 for chromatographic separation processes.

## Revendications

1. Dispositif d'exécution de procédés de sorption qui a la forme d'un mélangeur statique se composant de préférence de plusieurs couches, deux couches voisines étant en contact par leurs lieux d'appui et des canaux de circulation qui se croisent étant présents entre les couches voisines, dispositif dans lequel les couches formant la structure sont à paroi double laissant subsister des intervalles dont au moins certains sont remplis de matière de sorption, les parois des couches étant perméables au fluide en circulation contenant les corps adsorbés et imperméables aux matières de sorption.

2. Dispositif selon la revendication 1, caractérisé en ce que les parois des couches sont formées de tissu ou de tricot de fils lorsque la matière de sorption est solide.

3. Dispositif selon la revendication 2, caractérisé en ce qu'au moins certains des fils sont en métal.

4. Dispositif selon la revendication 2, caractérisé en ce que les fils sont en verre ou en matière plastique.

5. Dispositif selon la revendication 1, caractérisé en ce que les parois des couches sont en un feutre de matière plastique et/ou de fibres de verre.

6. Dispositif selon la revendication 1, caractérisé en ce que les parois des couches sont en une matière poreuse dont les pores ont une grandeur telle que la matière est perméable aux corps adsorbés et imperméable à la matière de sorption.

7. Dispositif selon la revendication 6, caractérisé en ce que les parois des couches sont formées de membranes semi-perméables.

8. Dispositif selon la revendication 6, caractérisé en ce que les parois des couches sont en matière frittée.

9. Dispositif selon la revendication 1, caractérisé en ce que, pour l'adsorption, les matières de sorption consistent en des particules de matière solide.

10. Dispositif selon la revendication 9, caractérisé en ce que l'état des particules de matière solide change par polymérisation après qu'elles ont été placées dans les intervalles, la matière poreuse qui en résulte étant perméable aux corps adsorbés.

11. Dispositif selon la revendication 9, caractérisé en ce qu'une structure poreuse de céramique ou une structure frittée qui est perméable aux corps adsorbés est formée à l'aide des particules de matière solide après qu'elles ont été placées dans les intervalles.

12. Dispositif selon la revendication 1, caractérisé en ce que les intervalles sont remplis de matière de sorption en alternance avec le balayage des autres intervalles par un agent de refroidissement ou un agent de chauffage.

13. Utilisation du dispositif selon la revendication 1 pour des procédés de séparation par chromatographie.
